# DEMANDE DE BREVET EUROPEEN

(11) **EP 2 873 541 A1**
(43) Date de publication de la demande: **20.05.2015**
(21) Numéro de dépôt: 14192197.3
(22) Date de dépôt: 07.11.2014
(51) Int. Cl.: B60H 1/00, H01M 10/60

(54) **Système de refroidissement des batteries d'un véhicule électrique ou hybride**

(30) Priorité: 18.11.2013 FR 1361314
(71) Demandeur: VALEO SYSTEMES THERMIQUES, 78320 Le Mesnil Saint-Denis (FR)
(72) Inventeur: Rousseau, Christophe, 78125 RAIZEUX (FR); Jovet, Bastien, 73210 PEISEY- NANCROIX (FR); Ladrech, Frédéric, 78310 MAUREPAS (FR)
(74) Mandataire: Pellegrini, Marie Claude

(57) **Abrégé**

L'invention concerne un circuit de refroidissement liquide de batterie d'accumulateurs équipant un véhicule automobile de type électrique ou hybride, comprenant une boucle principale (6) de circulation d'un fluide caloporteur reliée à des éléments de refroidissement (2) de batterie d'accumulateurs, et une première dérivation (8) reliant la boucle principale (6) à un radiateur (3) de refroidissement à air, ainsi qu'une seconde dérivation (9) reliant la boucle principale (6) à un échangeur de chaleur (4) destiné à être relié à un système de climatisation (13) équipant le véhicule automobile, de manière à refroidir le fluide caloporteur au moyen du radiateur (3) et/ou de l'échangeur de chaleur (4) du système de climatisation (13). La boucle principale (6) est raccordée à la première dérivation (8) par l'intermédiaire d'une première vanne trois voies progressive (11), et la boucle principale (6) est raccordée à la seconde dérivation (9) par l'intermédiaire d'une seconde vanne trois voies progressive (12).

## Description

L'invention concerne le refroidissement des batteries d'un véhicule électrique ou hybride dont la capacité et la durée de vie sont liées à la qualité de leur conditionnement thermique, telles que les batteries lithium-ion.

### ARRIERE PLAN DE L'INVENTION

Dans le domaine des véhicules électriques ou hybrides, il convient de refroidir les batteries d'accumulateurs d'énergie électrique qui s'échauffent durant leur charge ou décharge, afin d'en améliorer la capacité et la durée de vie.

Ce refroidissement est assuré au moyen d'un liquide caloporteur qui circule dans des plaques de refroidissement creuses en contact avec la ou les batteries ou avec leurs cellules constitutives, de manière à les refroidir par conduction thermique.

Le liquide caloporteur est refroidi par exemple au niveau d'un radiateur lui-même refroidi par de l'air extérieur, de sorte que la chaleur générée au niveau des batteries est évacuée vers l'extérieur par l'intermédiaire d'un circuit de refroidissement liquide.

Le liquide caloporteur peut également être refroidi par circulation dans un échangeur de type liquide caloporteur/réfrigérant, connecté à la boucle de climatisation principale du véhicule et dans lequel circule également la totalité ou une partie du réfrigérant de cette boucle.

Ces modes de refroidissement manquent néanmoins de précision et d'efficacité, de sorte qu'ils ne permettent pas toujours de maintenir le liquide caloporteur à une température de consigne avec suffisamment de précision.

### OBJET DE L'INVENTION

L'objet de cette invention est de proposer une nouvelle architecture de refroidissement des batteries d'un véhicule, plus précise.

### RESUME DE L'INVENTION

A cet effet, l'invention a pour objet un circuit de refroidissement liquide de batterie d'accumulateurs de véhicule automobile de type électrique ou hybride, caractérisé en ce qu'il comprend une boucle principale de circulation d'un fluide caloporteur reliée à des éléments de refroidissement de batterie d'accumulateurs, et au moins une dérivation reliant la boucle principale à au moins un radiateur de refroidissement à air et/ou à au moins un échangeur de chaleur destiné à être relié à un système de climatisation équipant le véhicule automobile, de manière à refroidir le fluide caloporteur au moyen du radiateur et/ou de l'échangeur de chaleur, chaque dérivation étant reliée à la boucle principale par l'intermédiaire d'un organe de régulation du débit dans chaque dérivation en fonction de la température du fluide caloporteur.

Si un échangeur ou un radiateur fournit une puissance de refroidissement du fluide caloporteur trop élevée par rapport aux contraintes thermiques des batteries, cette architecture permet de n'orienter qu'une partie du débit vers cet échangeur ou ce radiateur et de dévier l'autre partie. Ainsi, la température du fluide caloporteur destiné au refroidissement des batteries ne descend pas sous la température limite souhaitée et ce fluide circule de manière continue et stable au travers de l'architecture de refroidissement des batteries.

L'invention concerne également un circuit tel que défini ci-dessus, dans lequel chaque organe de régulation du débit est une vanne progressive à trois voies pilotée par une unité de commande reliée à une sonde de mesure de température du fluide caloporteur.

L'invention concerne également un circuit tel que défini ci-dessus, comprenant une première dérivation reliant la boucle principale au radiateur de refroidissement à air, et une seconde dérivation reliant la boucle principale à l'échangeur de chaleur, et dans lequel la première dérivation et la seconde dérivation sont reliées à la boucle principale chacune par un organe de régulation de débit en fonction de la température du fluide caloporteur.

L'invention concerne également un circuit tel que défini ci-dessus, dans lequel l'échangeur de chaleur destiné à être relié au système de climatisation est un évaporateur du fluide du système de climatisation.

Préférentiellement, le système de climatisation comprend un échangeur de chaleur qui est un évaporateur du fluide du système de climatisation.

L'invention concerne également un circuit tel que défini ci-dessus, dans lequel l'unité de commande comprend des moyens de pilotage du système de climatisation du véhicule, pour accroître ou réduire la puissance de refroidissement de ce système.

Selon une variante d'exécution de l'invention, le système de climatisation comprend une boucle principale comprenant un compresseur, un condenseur, un détendeur et un évaporateur. Le compresseur permet de forcer la circulation d'un fluide réfrigérant dans cette boucle pour qu'il traverse le condenseur avant de traverser le détendeur puis l'évaporateur avant d'atteindre à nouveau le compresseur. Dans cette boucle principale du système de climatisation, le fluide réfrigérant réalise ainsi un cycle thermodynamique dans lequel il évacue sa chaleur au niveau du condenseur, et dans lequel il capte la chaleur au niveau de l'évaporateur.

De manière préférentielle, la boucle principale du système de climatisation est reliée à l'échangeur de chaleur par l'intermédiaire d'une autre boucle de dérivation, qui est raccordée à la sortie du condenseur et à l'entrée du compresseur. Cette boucle de dérivation comprend préférentiellement un détendeur que le fluide réfrigérant traverse avant de circuler dans l'échangeur de chaleur pour ensuite retourner dans la boucle principale du système de climatisation en étant réinjecté en entrée du compresseur.

Selon une variante d'exécution de l'invention, le système de climatisation peut comprendre un organe de régulation du débit pour autoriser ou interdire la circulation de fluide réfrigérant dans le détendeur et dans l'évaporateur.

Par ailleurs, selon une autre variante d'exécution de l'invention, la boucle de dérivation reliant la boucle principale du système de climatisation à l'échangeur de chaleur peut comprendre un organe de régulation du débit pour autoriser ou interdire le passage de fluide réfrigérant dans le détendeur et dans l'échangeur.

Préférentiellement, la première et la seconde dérivation sont montées l'une après l'autre le long de la boucle principale. Les organes de régulation du débit sont alors actionnés pour que le fluide caloporteur soit refroidi successivement dans le radiateur et dans l'échangeur.

De manière préférentielle, lesdits organes de régulation du débit permettent une régulation progressive dudit débit.

La présente invention porte également sur un procédé de commande du circuit de refroidissement liquide de batterie d'accumulateurs de véhicule automobile de type électrique ou hybride tel que décrit précédemment, le circuit de refroidissement liquide comprenant :
- un échangeur de chaleur destiné à être relié à un système de climatisation équipant le véhicule automobile ;
- une unité de commande connectée à une sonde de mesure de la température du fluide caloporteur ainsi qu'à une sonde de mesure de la température de l'air extérieur, l'unité de commande comprenant des moyens de mémoire ;
   caractérisé en ce qu'il comprend la réalisation successive des étapes suivantes :
   a) l'enregistrement dans les moyens de mémoire, d'une valeur de température dite valeur de consigne et d'une autre valeur de température dite valeur de seuil ;
   b) la mesure par les sondes de mesure de la température du fluide caloporteur et de la température de l'air extérieur ;
   c) la comparaison de la température du fluide caloporteur et de la valeur de consigne par l'unité de commande, une valeur de température comprise par exemple entre 3 °C et 5 °C étant préférentiellement ajoutée ou soustraite à la valeur de consigne avant de procéder à cette comparaison ;
   d.1) si la température du fluide caloporteur est supérieure à la valeur de consigne, la comparaison de la température de l'air extérieur et de la valeur de seuil par l'unité de commande, une valeur de température comprise par exemple entre 3 °C et 5 °C étant préférentiellement ajoutée ou soustraite à la valeur de seuil avant de procéder à cette comparaison ;
   d.2) si la température de l'air extérieur est inférieure à la valeur de seuil, la commande par l'unité de commande :
- de l'augmentation progressive de l'ouverture de l'organe de régulation du débit de l'échangeur de chaleur si l'organe de régulation du débit du radiateur est totalement ouvert ;
- de l'augmentation progressive de l'ouverture de l'organe de régulation du débit du radiateur si l'organe de régulation du débit du radiateur n'est pas totalement ouvert, préférentiellement si l'organe de régulation du débit de l'échangeur de chaleur est totalement fermé ;
   d.3) si la température de l'air extérieur est supérieure ou égale à la valeur de seuil, la commande par l'unité de commande de l'augmentation progressive de l'ouverture de l'organe de régulation du débit de l'échangeur de chaleur et la fermeture de l'organe de régulation du débit du radiateur ;
   e.1) si la température du fluide caloporteur est inférieure à la valeur de consigne, la commande par l'unité de commande :
- de la diminution progressive de l'ouverture de l'organe de régulation du débit du radiateur si l'organe de régulation du débit de l'échangeur de chaleur est totalement fermé et si l'organe de régulation du débit du radiateur est ouvert ;
- de la diminution progressive de l'ouverture de l'organe de régulation du débit de l'échangeur de chaleur si l'organe de régulation du débit de l'échangeur de chaleur est ouvert.

De manière préférentielle, lorsque le besoin en refroidissement augmente encore, l'unité de commande commande le système de climatisation pour accroître sa puissance de refroidissement, de manière à refroidir le fluide caloporteur suffisamment pour qu'il atteigne la valeur de consigne.

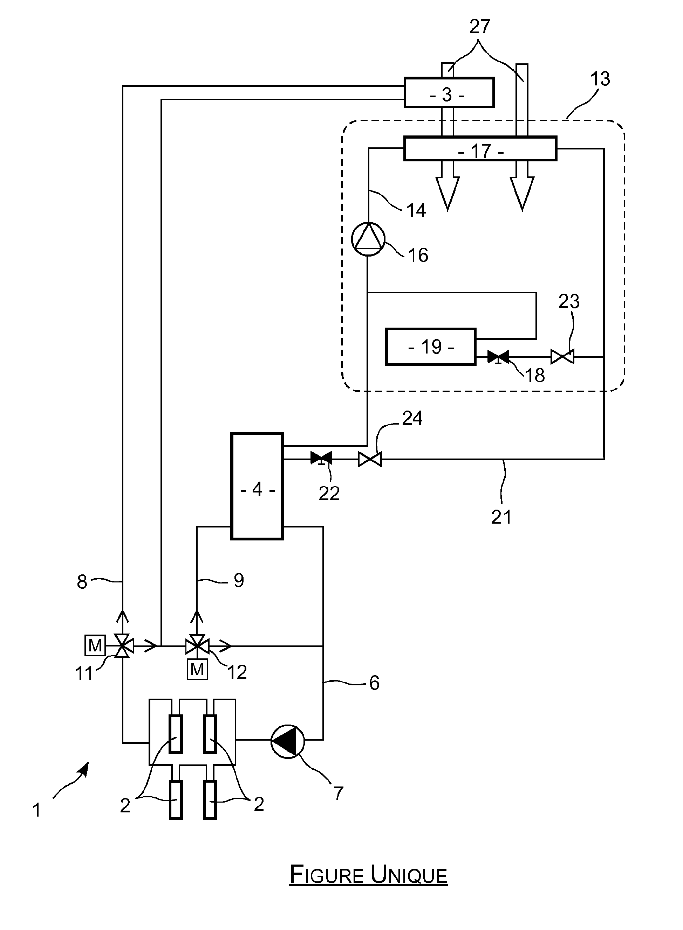

La présente invention sera mieux comprise et d'autres caractéristiques et avantages apparaîtront à la lecture de la description détaillée qui suit et qui comprend des modes de réalisation donnés à titre illustratif en référence avec la figure unique annexée, présentés à titre d'exemples non limitatifs, qui pourront servir à compléter la compréhension de la présente invention et l'exposé de sa réalisation et, le cas échéant, contribuer à sa définition.
- La figure unique représente, de façon schématique, un circuit de refroidissement liquide de batterie d'accumulateurs de véhicule automobile de type électrique ou hybride selon l'invention.

### DESCRIPTION DETAILLEE DE L'INVENTION

Le circuit selon l'invention qui est représenté à la figure unique en y étant repéré par 1, refroidit des batteries d'accumulateurs non représentées au moyen de plusieurs plaques de refroidissement 2 dans lesquelles circule un fluide caloporteur. Ces plaques de refroidissement 2 sont au contact des batteries d'accumulateurs ou de leurs cellules pour les refroidir par conduction.

Ce fluide caloporteur est maintenu à une température dont la valeur est dite valeur de consigne en étant refroidi, selon les conditions extérieures, par un radiateur 3 qui est lui-même refroidi par un flux d'air extérieur, et/ou par un échangeur de chaleur 4 qui est refroidi par un circuit d'un système de climatisation 13 équipant le véhicule.

Le circuit de refroidissement proprement dit comprend une boucle principale 6 comprenant une pompe 7, pour forcer la circulation du fluide caloporteur dans les plaques de refroidissement 2. Cette boucle principale 6 est raccordée d'une part au radiateur 3 par l'intermédiaire d'une première boucle de dérivation 8, et elle est raccordée à l'échangeur de chaleur 4 par l'intermédiaire d'une seconde boucle de dérivation 9.

Ce circuit comprend une première vanne trois voies progressive 11 par l'intermédiaire de laquelle la boucle principale 6 est en communication avec la première boucle de dérivation 8. Lorsque cette vanne 11 est complètement ouverte, la totalité du fluide caloporteur circulant dans la boucle principale 6 parcourt également la première dérivation 8, de sorte qu'il est alors refroidi dans le radiateur 3. Lorsque cette vanne 11 est au contraire complètement fermée, il n'y a pas de circulation du fluide caloporteur dans la première boucle de dérivation 8.

Ce circuit comprend une seconde vanne trois voies progressive 12, par l'intermédiaire de laquelle la boucle principale 6 est en communication avec la seconde boucle de dérivation 9. Lorsque cette seconde vanne 12 est complètement ouverte, tout le fluide caloporteur circulant dans la boucle principale 6 parcourt également la seconde dérivation 9, de sorte qu'il est alors refroidi dans l'échangeur de chaleur 4. Lorsque cette seconde vanne 12 est au contraire complètement fermée, il n'y a pas de circulation de fluide caloporteur dans la seconde dérivation 9.

Ainsi, la première vanne 11 est la vanne permettant de piloter la circulation de fluide caloporteur dans le radiateur 3, alors que la seconde vanne 12 est celle qui permet de réguler la circulation du fluide caloporteur dans l'échangeur de chaleur 4.

Tel que cela est visible sur la figure unique, l'échangeur de chaleur 4, qui est du type fluide caloporteur/réfrigérant et qui est raccordé à la seconde dérivation 9, est également raccordé à un système de climatisation 13 qui équipe également le véhicule automobile. Ainsi, l'échangeur de chaleur 4 permet de refroidir le fluide caloporteur grâce au froid produit par le système de climatisation 13.

Ce système de climatisation 13 comprend une boucle principale 14 comprenant un compresseur 16 forçant la circulation de fluide réfrigérant dans cette boucle 14 pour qu'il traverse un condenseur 17 avant de traverser un détendeur 18 puis un évaporateur 19 avant d'atteindre à nouveau le compresseur 16. Dans cette boucle principale, le fluide réfrigérant réalise ainsi un cycle thermodynamique dans lequel il évacue sa chaleur au niveau du condenseur 17, et dans lequel il capte la chaleur au niveau de l'évaporateur 19.

Cette boucle principale 14 est reliée à l'échangeur de chaleur 4 par l'intermédiaire d'une autre boucle de dérivation 21, qui est raccordée à la sortie du condenseur 17 et à l'entrée du compresseur 16. Cette boucle de dérivation 21 comprend un détendeur 22 que le fluide réfrigérant traverse avant de circuler dans l'échangeur de chaleur 4 pour ensuite retourner dans la boucle principale en étant réinjecté en entrée du compresseur 16.

De plus, le système de climatisation 13 comprend une vanne 23 pour autoriser ou interdire la circulation de fluide réfrigérant dans le détendeur 18 et dans l'évaporateur 19. La boucle de dérivation 21 comprend une vanne 24 pour autoriser ou interdire le passage de fluide réfrigérant dans le détendeur 22 et dans l'échangeur 4.

Ainsi, lorsque le système de climatisation 13 est en service, tout ou partie du fluide réfrigérant de ce système 13 peut être dévié vers l'échangeur de chaleur 4, de manière à assurer le refroidissement du fluide caloporteur circulant dans le circuit 1 de refroidissement des batteries.

Une unité de commande non représentée est raccordée au circuit 1 et au système 13 par l'intermédiaire de différentes sondes et elle est également raccordée aux vannes progressives trois voies 11 et 12 pour les piloter de manière à refroidir le fluide caloporteur pour le maintenir à sa température de consigne.

Par ailleurs, le radiateur 3 et le condenseur 17 sont soumis à un flux d'air de refroidissement qui est matérialisé par les flèches 27, et grâce auquel, d'une part le radiateur 3 refroidit le fluide caloporteur circulant dans ce radiateur 3, et d'autre part le condenseur 17 peut évacuer la chaleur du fluide réfrigérant du système de climatisation 13.

Tel que cela est visible sur la figure unique, la première 8 et la seconde 9 dérivation sont montées l'une après l'autre le long de la boucle principale 6. Les vannes 11 et 12 peuvent ainsi être actionnées pour que le fluide caloporteur soit refroidi successivement dans le radiateur 3 et dans l'échangeur 4.

Le procédé de commande du circuit de refroidissement liquide 1 comprend une sélection de l'ouverture et de la fermeture des vannes 11, 12 en fonction notamment du besoin en refroidissement des batteries.

Ainsi, lorsque le besoin en refroidissement des batteries est relativement faible et que la température de l'air extérieur est suffisamment froide, la vanne 12 de l'échangeur de chaleur 4 est fermée, de sorte que le fluide caloporteur ne peut pas passer dans l'échangeur de chaleur 4, et la vanne 11 du radiateur 3 est ouverte de façon plus ou moins importante, pour maintenir le fluide caloporteur à sa température de consigne.

Ce pilotage est assuré par l'unité de commande non représentée qui est connectée à une sonde de mesure de la température du fluide caloporteur, et qui augmente l'ouverture de la vanne 11 si la température mesurée est supérieure à la valeur de consigne, et qui diminue cette ouverture lorsque la température mesurée est inférieure à la valeur de consigne.

Par contre, lorsque le besoin en refroidissement est plus grand, c'est-à-dire lorsque la vanne 11 du radiateur 3 est complètement ouverte mais que la température du fluide caloporteur reste supérieure à la température de consigne, la vanne 12 associée à l'échangeur 4 est actionnée pour s'ouvrir afin de faire passer tout ou partie du fluide caloporteur qui a été refroidi par le radiateur 3, dans l'échangeur de chaleur 4.

Dans ce cas, le système de climatisation 13 est enclenché de manière à assurer tout ou partie du refroidissement du fluide caloporteur. Concrètement, le système de climatisation 13 peut avoir été préalablement enclenché par les occupants de l'habitacle du véhicule cherchant à faire baisser la température dans l'habitacle. Dans le cas contraire, le système de climatisation 13 est mis en service par l'unité de commande non représentée, qui en outre pilote les vannes 23 et 24 pour assurer que du fluide réfrigérant circule effectivement dans l'échangeur de chaleur 4.

Le fluide caloporteur est alors refroidi dans l'échangeur de chaleur 4 par le fluide réfrigérant du système de climatisation 13 qui circule également dans cet échangeur 4, ce qui permet d'accroître significativement la puissance de refroidissement, pour permettre le maintien du fluide caloporteur à sa température de consigne.

La vanne progressive 11 du radiateur 3 est alors complètement ouverte, et la vanne progressive 12 de l'échangeur 4 est asservie sur la température du fluide caloporteur, pour le maintenir à sa température de consigne.

Dans cette configuration, il est aussi possible de réduire voire fermer l'ouverture de la vanne 11 du radiateur 3, en particulier si la température extérieure est supérieure à la température du fluide caloporteur entrant dans le radiateur 3, c'est-à-dire dans le cas où les conditions de fonctionnement ne permettent pas au radiateur 3 de refroidir le fluide caloporteur.

Lorsque le besoin en refroidissement augmente encore, l'unité de commande non représentée pilote le système de climatisation 13 pour accroître sa puissance de refroidissement, de manière à refroidir le fluide caloporteur suffisamment pour qu'il atteigne la température de consigne.

Ainsi, dans cette situation, la vanne 12 de l'échangeur de chaleur 4 est complètement ouverte pour que la totalité du débit de fluide caloporteur passe dans l'échangeur de chaleur 4, et le pilotage du système de climatisation 13 par l'unité de commande est asservi sur la température du fluide caloporteur.

Dans l'exemple illustré sur la figure unique, le circuit 1 comprend deux dérivations distinctes 8, 9 alimentées respectivement par deux vannes progressives trois voies 11, 12 pilotées par une unité de commande, mais des solutions plus simples peuvent également être envisagées dans le cadre de l'invention.

Ainsi, l'une et/ou l'autre des vannes trois voies progressives 11 et 12 peuvent être remplacées par un ou des organes de régulation de débit de type calorstat ou analogue. De tels organes permettent d'accroître progressivement le débit dans chaque dérivation en cas d'augmentation de la température du fluide caloporteur et inversement, de manière passive, c'est-à-dire sans qu'il soit nécessaire de prévoir une unité de commande dédiée avec une sonde thermique associée.

L'architecture du circuit peut aussi être simplifiée, en prévoyant par exemple non pas deux dérivations distinctes dédiées respectivement à l'échangeur de chaleur de type fluide caloporteur/air et à l'échangeur de chaleur de type fluide caloporteur/réfrigérant, mais une seule dérivation progressive permettant de répartir le débit de fluide caloporteur entre l'échangeur de chaleur de type fluide caloporteur/air et l'échangeur de chaleur de type fluide caloporteur/réfrigérant. Cette dérivation unique étant alors reliée à la boucle principale par un organe régulant la répartition du débit entre les deux circuits en fonction de la température du fluide.

## Revendications

1. Circuit de refroidissement liquide de batterie d'accumulateurs de véhicule automobile de type électrique ou hybride, **caractérisé en ce qu'**il comprend une boucle principale (6) de circulation d'un fluide caloporteur reliée à des éléments de refroidissement (2) de batterie d'accumulateurs, et au moins une dérivation (8, 9) reliant la boucle principale (6) à au moins un radiateur (3) de refroidissement à air et/ou à au moins un échangeur de chaleur (4) destiné à être relié à un système de climatisation (13) équipant le véhicule automobile, de manière à refroidir le fluide caloporteur au moyen du radiateur (3) et/ou de l'échangeur de chaleur (4), chaque dérivation (8, 9) étant reliée à la boucle principale (6) par l'intermédiaire d'un organe de régulation du débit (11, 12) dans chaque dérivation (8, 9) en fonction de la température du fluide caloporteur.

2. Circuit selon la revendication 1, **caractérisé en ce que** chaque organe de régulation du débit (11, 12) est une vanne progressive à trois voies pilotée par une unité de commande reliée à une sonde de mesure de température du fluide caloporteur.

3. Circuit selon la revendication 2, **caractérisé en ce que** l'unité de commande comprend des moyens de pilotage du système de climatisation (13) du véhicule, pour accroître ou réduire la puissance de refroidissement de ce système (13).

4. Circuit selon l'une des revendications 1 à 3, **caractérisé en ce qu'**il comprend une première dérivation (8) reliant la boucle principale (6) au radiateur (3) de refroidissement à air, et une seconde dérivation (9) reliant la boucle principale (6) à l'échangeur de chaleur (4), et dans lequel la première dérivation (8) et la seconde dérivation (9) sont reliées à la boucle principale (6) chacune par un organe (11, 12) de régulation de débit en fonction de la température du fluide caloporteur.

5. Circuit selon l'une des revendications 1 à 4, **caractérisé en ce que** l'échangeur de chaleur (4) destiné à être relié au système de climatisation (13) est un évaporateur du fluide du système de climatisation (13).

6. Circuit selon l'une des revendications précédentes, **caractérisé en ce que** le système de climatisation (13) comprend un échangeur de chaleur (19) qui est un évaporateur du fluide du système de climatisation (13).

7. Circuit selon l'une des revendications précédentes, **caractérisé en ce que** lesdits organes de régulation du débit (11, 12) permettent une régulation progressive dudit débit.

8. Procédé de commande du circuit de refroidissement liquide de batterie d'accumulateurs de véhicule automobile de type électrique ou hybride selon l'une quelconque des revendications précédentes, le circuit de refroidissement liquide comprenant :
- un échangeur de chaleur (4) destiné à être relié à un système de climatisation (13) équipant le véhicule automobile ;
- une unité de commande connectée à une sonde de mesure de la température du fluide caloporteur ainsi qu'à une sonde de mesure de la température de l'air extérieur, l'unité de commande comprenant des moyens de mémoire ;
**caractérisé en ce qu'**il comprend la réalisation successive des étapes suivantes :
a) l'enregistrement dans les moyens de mémoire, d'une valeur de température dite valeur de consigne et d'une autre valeur de température dite valeur de seuil ;
b) la mesure par les sondes de mesure de la température du fluide caloporteur et de la température de l'air extérieur ;
c) la comparaison de la température du fluide caloporteur et de la valeur de consigne par l'unité de commande ;
d.1) si la température du fluide caloporteur est supérieure à la valeur de consigne, la comparaison de la température de l'air extérieur et de la valeur de seuil par l'unité de commande ;
d.2) si la température de l'air extérieur est inférieure à la valeur de seuil, la commande par l'unité de commande :
- de l'augmentation progressive de l'ouverture de l'organe de régulation du débit (12) de l'échangeur de chaleur (4) si l'organe de régulation du débit (11) du radiateur (3) est totalement ouvert ;
- de l'augmentation progressive de l'ouverture de l'organe de régulation du débit (11) du radiateur (3) si l'organe de régulation du débit du radiateur n'est pas totalement ouvert ;
d.3) si la température de l'air extérieur est supérieure ou égale à la valeur de seuil, la commande par l'unité de commande de l'augmentation progressive de l'ouverture de l'organe de régulation du débit (12) de l'échangeur de chaleur (4) et la fermeture de l'organe de régulation du débit (11) du radiateur (3) ;
e.1) si la température du fluide caloporteur est inférieure à la valeur de consigne, la commande par l'unité de commande :
- de la diminution progressive de l'ouverture de l'organe de régulation du débit (11) du radiateur (3) si l'organe de régulation du débit (12) de l'échangeur de chaleur (4) est totalement fermé et si l'organe de régulation du débit (11) du radiateur (3) est ouvert ;
- de la diminution progressive de l'ouverture de l'organe de régulation du débit (12) de l'échangeur de chaleur (4) si l'organe de régulation du débit (12) de l'échangeur de chaleur (4) est ouvert.
